## Europäisches Patentamt
## European Patent Office
## Office européen des brevets

(19)

(11) Numéro de publication: **0 169 745**
**B1**

(12)
# FASCICULE DE BREVET EUROPÉEN

(45) Date de publication du fascicule du brevet:
**12.07.89**

(21) Numéro de dépôt: **85400949.5**

(22) Date de dépôt: **14.05.85**

(51) Int. Cl.⁴: **G 07 B 1/00,** G 07 B 11/03,
G 06 K 13/07

(54) **Dispositif de traitement de titres cartonnés, propre à la création et/ou au contrôle du titre.**

(30) Priorité: **29.06.84 FR 8410378**

(43) Date de publication de la demande:
**29.01.86 Bulletin 86/5**

(45) Mention de la délivrance du brevet:
**12.07.89 Bulletin 89/28**

(84) Etats contractants désignés:
**CH DE GB IT LI SE**

(56) Documents cité:
**EP-A-0 097 471**
**CH-A-604 293**
**FR-A-2 411 710**
**FR-A-2 455 926**
**FR-A-2 533 048**
**GB-A-2 073 153**
**US-A-3 850 299**
**US-A-4 196 846**

**PATENTS ABSTRACTS OF JAPAN, vol. 7, no. 198 (P-220)(1343); 02 septembre 1983; & JP - A - 58 096 383 (FUJITSU K.K.) 08-06-1983**

(73) Titulaire: **ELECTRONIQUE SERGE DASSAULT, 80, avenue Marceau, F-75008 PARIS (FR)**

(72) Inventeur: **Pailler, Alain, 67, boulevard Maréchal Joffre, F-92340 Bourg La Reine (FR)**

(74) Mandataire: **Plaçais, Jean- Yves, Cabinet Netter 40, rue Vignon, F-75009 Paris (FR)**

LIBER, STOCKHOLM 1989

EP 0 169 745 B1

## Description

L'invention concerne les dispositifs de traitement de titres cartonnés, tels que les titres de transport ou analogues.

Beaucoup de titres de transport modernes sont réalisés à partir d'un support papier, plus ou moins renforcé pour avoir une rigidité suffisante. On appelle ici titre cartonné un tel support, qui est la plupart du temps muni d'une piste magnétique. Dans certains cas, le titre présente aussi des lignes d'affaiblissement, qui permettent d'en séparer un ou plusieurs volets lors de contrôles.

D'une manière générale, le traitement de ces titres commence par la création d'un titre valable à partir d'un support d'information vierge, pour continuer par une ou plusieurs opérations de contrôle du titre, et se terminer le cas échéant par l'invalidation du titre, après usage.

Le problème s'est posé à la Demanderesse de réaliser un dispositif propre aussi bien à la création d'un titre qu'au contrôle et/ou à l'invalidation de celui-ci, dispositif qui soit mécaniquement aussi simple que possible, et fiable même en présence de titres abimés, ce à des conditions économiques raisonnables compte tenu des applications de ce type d'appareil.

Une solution est proposée dans la Demande de Brevet français FR-A-2 455 926 qui concerne un dispositif de traitement d'objets plats sous forme de feuilles. Le dispositif comprend une fente d'entrée formée de deux galets pour entraîner lesdits objets selon un trajet interne en vue de les trier à l'aide de capteurs. En réponse a un tri négatif, l'objet est renvoyé, en marche arrière, vers l'extérieur, en association avec une plaque de guidage, fixe, disposée entre le trajet interne et la fente d'entrée.

Un tel dispositif n'est pas satisfaisant car la plaque de guidage n'accomplit pas toujours sa fonction de façon acceptable en présence de feuilles abîmées par exemple.

Ce problème a été résolu à partir d'un dispositif de traitement de titres cartonnés, comprenant des moyens d'entraînement d'un titre selon un trajet interne du dispositif, trajet qui passe par au moins un poste de traitement, tel qu'un poste d'impression sur le titre, et dont l'une au moins des extrémités est définie par une paire de galets sensiblement tangents l'un à l'autre, tandis qu'il est prévu, en dehors du trajet interne, un organe de guidage pour l'apport d'un titre dans ledit trajet interne.

Selon une caractéristique de l'invention, la tangente commune aux deux galets de la paire est inclinée sur l'axe de guidage de l'organe d'apport, au-dessous de cet axe, ce même axe demeure sensiblement tangent au galet supérieur et l'espace entre la paire de galets et l'axe de guidage de l'organe d'apport est libre, ce qui permet, sans organe de guidage supplémentaire, une marche arrière du titre sans que ce dernier ne retourne dans ledit organe de guidage et d'apport.

Selon un autre aspect de l'invention, l'autre extrémité du trajet interne est aménagée comme la première.

Selon encore un autre aspect de l'invention, un réceptacle de titres est placé sous l'un au moins des organes de guidage et d'apport.

Dans un premier mode de réalisation, l'organe de guidage et d'apport comprend un magasin contenant une pile de titres prédécoupés.

Dans un second mode de réalisation, l'organe de guidage et d'apport comprend un dévidoir de ruban cartonné continu associé à des moyens de découpe.

Dans un troisième mode de réalisation, l'organe de guidage et d'apport est propre à recevoir un titre déjà émis.

Selon un mode de réalisation particulier de l'invention, les moyens d'entraînement du titre sur le trajet interne comprennent au moins une courroie crantée qui s'enroule en circuit fermé sur des galets; dans sa partie concernant le trajet interne du titre, la courroie crantée s'appuie sur des galets, sur lesquels elle s'incurve, tandis que le titre passe entre la courroie et les galets, et, en principe, deux galets adjacents sont espacés d'une distance inférieure à la longueur du titre.

De préférence, l'angle d'incurvation de la courroie sur chaque galet est compris entre 160 et 170°. Par ailleurs, la courroie crantée peut être entraînée par un moteur pas à pas, et aussi sollicitée par un galet tendeur situé en dehors du trajet interne.

Selon une variante de réalisation, où le titre cartonné possède une piste magnétique, la courroie crantée qui suit le titre de l'entrée à la sortie s'efface au niveau d'un poste à tête magnétique, situé en un second point du trajet interne, où le titre est sollicité vers la tête magnétique par une seconde courroie coopérant par friction avec la première. Dans ce cas, les courroies sont, de préférence, situées sensiblement au droit de la piste magnétique.

Plus particulièrement encore, le pas du crantage de la première courroie est inférieur à 5 mm, de préférence voisin de 2 mm; de son côté, le poste de traitement comprend une imprimante à aiguille faisant face à un rouleau qui forme contre-plaque d'impression.

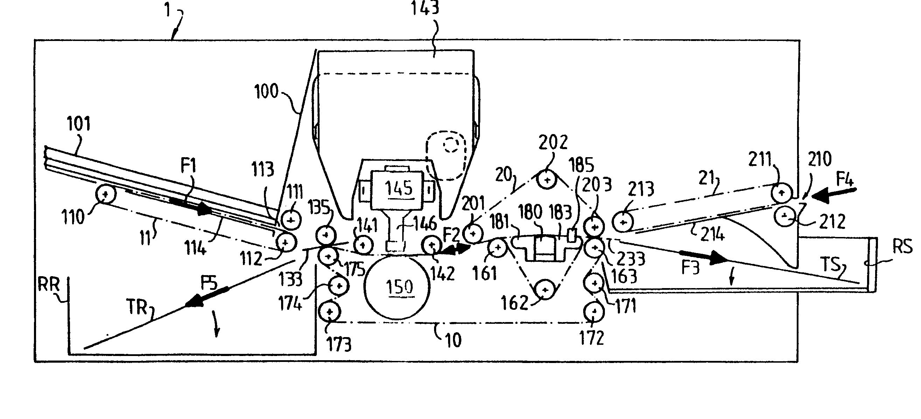

D'autres caractéristiques et avantages de l'invention apparaîtront à l'examen de la description détaillée qui va suivre et du dessin annexé, dont la figure unique est une vue latérale schématique d'un dispositif de traitement selon la présente invention.

Sur la figure, la référence 1 désigne généralement le bâti du dispositif.

La référence 100 désigne un magasin contenant une pile 101 (ici très réduite) de titres prédécoupés. Au fond de ce magasin sont prévus des moyens (non représentés) qui permettent d'isoler le titre du bas de la pile pour permettre son "dépilement". Le titre inférieur ainsi isolé vient en appui sur une plaque 114, au-dessus de laquelle se déplace une courroie 11 qui s'enroule sur deux galets 110 et 112. Au droit du galet 112 est prévu un autre galet 111 qui facilite la sortie du titre. On a représenté en 113 l'axe de guidage du titre ainsi débité hors du magasin 100.

Ce titre va maintenant entrer dans le "trajet interne" du dispositif de traitement.

L'une des extrémités de ce trajet interne est définie par une paire de galets 135 et 175. L'autre extrémité est définie par la paire de galets 163 et 203.

Une courroie 10, de préférence crantée, s'enroule sur des galets 173 et 174 avant de tourner autour du galet 175, sur lequel elle passe. La courroie 10 rencontre alors un poste d'impression défini par une imprimante à aiguilles dont on distingue le culot 145 et le canal d'aiguilles 146. De façon solidaire de cette imprimante, un dévidoir 143 apporte à l'imprimante un ruban encreur. Le ticket passe, de part et d'autre du poste d'impression, entre des galets 141 et 142 et la courroie 10. Après cela, la courroie 10 est déportée par un galet 161, renvoyée par un galet 162, et reprise par le galet 163 qui constitue l'autre extrémité du trajet interne. Après ce galet 163, la courroie est reprise par d'autres galets 171 et 172, ce dernier la renvoyant vers le galet 173 déjà cité.

Cette disposition au niveau des galets 161 à 163 a pour but de permettre l'insertion sur le trajet interne d'une tête magnétique 180 portée par une platine 181 et 183 et munie avantageusement d'un détecteur de passage de ticket 185. En regard de la platine 180, 181 et 183, il est prévu une seconde courroie 20, oui s'enroule sur deux galets 201 et 203, ainsi que sur un galet de retour 202. Des moyens non représentés assurent la mise en tension des courroies 10 et 20, et l'entraînement de la courroie 10, et par conséquent de la courroie 20.

Des détails supplémentaires sur le trajet interne pourront être trouvés dans la Demande de brevet N° 8 311 444, déposée le 8 juillet 1983 au nom de la Demanderesse, et publiée sous le n° FR-A-2 548 804. Le contenu descriptif de cette Demande de brevet antérieure est à considérer comme incorporé à la présente Demande de brevet.

On note qu'en regard de la tête d'impression 145 et 146 il est prévu un rouleau 150, qui forme contre-plaque d'impression. De préférence, la courroie 10 peut s'insérer en continuité avec la génératrice du rouleau 150, comme enseigné dans la Demande de brevet antérieure citée cidessus.

Toutefois, il est clair que la présente invention peut aussi s'appliquer à d'autres modes de réalisation du trajet interne, qui ne s'appuieraient pas sur l'usage d'une ou plusieurs courroies.

L'examen de la figure annexée montre que la paire de galets 135 et 175 située à l'extrémité gauche du trajet interne définit un axe d'entrée 133 pour le titre ou ticket. Cet axe est normalement défini par la tangente commune aux deux galets 135 et 175. Il apparaît immédiatement que l'axe 133 est incliné, par le dessous, sur l'axe 113 dans lequel l'organe de guidage et d'apport de titres 100 amène le ticket vers le trajet interne.

En effet, et de façon surprenante, la Demanderesse a observé qu'il est tout à fait possible d'obtenir une introduction correcte du ticket dans le trajet interne dont l'entrée est définie par les galets 135 et 175, même si l'axe 133 n'est pas sensiblement aligné sur l'axe 113. Il suffit simplement que l'axe 113 amène le ticket de façon sensiblement tangente au galet supérieur 135, de préférence de façon légèrement sécante sur ce galet. L'entraînement du galet 135, par un moteur ou par la courroie, crée alors une légère déflexion du titre, qui s'introduit entre les galets 135 et 175, et emprunte donc correctement le trajet interne. A cet égard, le dessin montre une disposition convenable des positions relatives des galets 111 et 112 d'une part, 135 et 175 d'autre part.

Cette disposition peut être utilisée non seulement à l'extrémité gauche du trajet interne, extrémité définie par les galets 135 et 175, mais aussi à son extrémité droite définie par les galets 163 et 203. On note en effet à droite de la figure qu'il est prévu une fente d'entrée 210, qui permet l'introduction d'un ticket entre deux galets 211 et 212. Immédiatement en aval, le ticket est supporté par une plaque 214. Une courroie 21 s'enroule sur le galet 211, et sur un autre galet 213. Cette courroie est convenablement entraînée pour permettre l'introduction du ticket, et son arrivée vers l'autre extrémité du trajet interne.

On observe là encore que la tangente commune 233 aux deux galets 163 et 203 est inclinée, vers le dessous, par rapport à l'axe d'introduction du ticket par la droite, axe qui correspond sensiblement à la partie basse rectiligne de la courroie 21. Comme précédemment, le ticket ainsi introduit par la droite va se trouver tangent au galet 203, ou légèrement sécant sur celui-ci, et pouvoir néanmoins être introduit entre les galets 203 et 163, pourvu bien entendu que l'on ait entre temps inversé le sens de rotation des courroies 10 et 20.

Sous l'organe de guidage et d'apport situé à gauche, et référencé 100, il est prévu un réceptacle de rejet RR, dans lequel des tickets rejetés tels que TR peuvent être introduits. De même, sous l'organe de guidage et d'apport situé à droite, il est prévu un réceptacle RS, ou réceptacle de sortie, accessible à l'extérieur, et dans lequel peuvent être délivrés des tickets TS.

Dans une variante de l'invention, le magasin à tickets 100 peut être remplacé par un dévidoir d'un ruban continu, dont la largeur est au format du ticket, et dont des sections peuvent être découpées de manière convenable par un massicot. Une façon de le faire est décrite dans la Demande de brevet 8 311 444 précitée.

Il apparaît maintenant que le dispositif selon l'invention constitue un dispositif de traitement de titres cartonnés très souple, c'est-à-dire capable de pourvoir à la quasi-totalité des opérations demandées dans le traitement de tels titres:

- A la création du titre, un titre vierge déjà découpé, ou une section de ruban coupée sur place est débitée par l'organe d'apport 100 et introduite comme indiqué par la flèche F1, en direction du trajet interne, qu'il va alors parcourir vers la droite. Le titre est alors muni d'une impression convenable au niveau de la tête d'impression 145, qui est bien entendu mobile transversalement au plan de la figure. Si le titre comporte une piste magnétique, celle-ci peut faire l'objet des inscriptions convenables au niveau de la tête 100 (dans le cas contraire, la partie correspondante du trajet interne peut être supprimée, de même que la courroie 20, la courroie 10 suivant alors un trajet pratiquement en ligne droite). Le titre ainsi établi sort alors, et se trouve délivré comme indiqué par la flèche F3 dans le réceptacle de sortie, où l'usager peut le prendre. Si un contrôle, par des moyens non représentés, a montré que le titre est improprement créé, il peut être rejeté dans le réceptacle RR, par simple inversion du mouvement de la courroie 10, et ce sans qu'aucune commutation mécanique ou autre ne soit nécessaire pour éviter qu'ue le titre ne reprenne son chemin initial matérialisé par la flèche F1. Un autre avantage est que, si l'impression s'effectue en longueur sur le titre, et que celui-ci est d'une grande longueur par rapport au trajet interne, le titre peut subir de nombreux allers-retours au niveau de la tête d'impression 146, en passant sous l'organe de guidage d'entrée 100, et sous le galet 112, là encore sans aucune nécessité d'une commutation mécanique ou autre.

- Un titre ainsi créé, dans une machine qui pourra également le faire payer à l'usager, peut être utilisé ensuite au niveau d'un poste de contrôle. Le titre est alors introduit par exemple comme indiqué par la flèche F4. Il rentre dans le trajet interne, pour y subir une lecture magnétique, éventuellement une réinscription partielle par la tête magnétique 180, et si nécessaire une réimpression au niveau de la tête 146. Une fois contrôlé, le titre est renvoyé comme indiqué par la flèche F3 dans le réceptacle de sortie à disposition de l'usager. Une indication convenable est bien entendu donnée à l'usager, pour lui spécifier que son titre est reconnu comme valable ou non. Dans le cas de fraudes manifestes, le titre peut être renvoyé dans le réceptacle de rebut RR.

- Dans certains situations, il est nécessaire de faire un contrôle après usage du tritre. C'est le cas exemple dans certains moyens de transport. Là encore, le titre peut être introduit comme indiqué par la flèche F4, contrôlé de la même manière que dans' la cas précédent, puis soit envoyé au réceptacle de rebut RR s'il s'agit d'un titre à usage unique, soit retourné à l'usager dans le réceptacle de sortie RS, s'il s'agit d'un titre à usage multiples et non encore périmé.

Il a été noté que la mise au rebut du titre s'effectue par simple inversion du mouvement de la courroie. De plus, le retour naturel du titre sous le poste d'impression, en direction de la boîte à rejets (RR), permet d'imprimer au passage des mentions d'annulation du titre, qui le rendent totalement inutilisable. Ceci accroît sensiblement la sécurité du dispositif.

Dans le mode de réalisation préférentiel décrit, le trajet interne est défini par une courroie. Il est à remarquer que cette courroie, de préférence crantée, s'appuie sur des galets 141, 142, 201 et 161 sur lesquels elle s'incurve, tandis que le titre passe entre la courroie et les galets. De plus, deux galets adjacents sont espacés d'une distance inférieure à la longueur du titre. Il s'est avéré que celui-ci constitue un excellent moyen pour le guidage d'un titre cartonné dans un dispositif d'impression. A côté de cela, dans les parties du trajet interne où deux courroies sont utilisées, comme c'est le cas ici au niveau du poste de lecture magnétique, le guidage du titre s'effectue, au moins pour partie, entre les deux courroies, ou entre l'une des courroies, par exemple à la courroie 20, et la platine définie par les parties 181 et 183 encadrant la tête magnétique 180.

**Revendications**

1. Dispositif de traitement de titres cartonnés, du type comprenant des moyens (10, 135, 10, 203) pour l'entraînement d'un titre selon un trajet interne du dispositif, trajet qui passe par au moins un poste de traitement (145,146), tel qu'un poste d'impression sur le titre, dont l'une au moins des extrémités est définie par une paire de galets (135, 175) sensiblement tangents l'un à l'autre, tandis qu'il est prévu en dehors du trajet interne, un organe de guidage (11, 110 à 114) pour l'apport d'un titre dans ledit trajet interne, caractérisé en ce que la tangente commune (133) aux deux galets de la paire (135, 175) est inclinée sur l'axe de guidage (113) de l'organe d'apport, au-dessous de cet axe, en ce que ce même axe (113) demeure sensiblement tangent au galet supérieur et en ce que l'espace entre la paire de galets (135, 175) et l'axe de guidage (113) de l'organe d'apport est libre, ce qui permet, sans organe de guidage supplémentaire, une marche arrière du titre sans que ce dernier ne retourne dans ledit organe de guidage et d'apport.

2. Dispositif selon la revendication 1, caractérisé en ce que l'autre extrémité du trajet interne (203, 163) est aménagée comme la première.

3. Dispositif selon l'une des revendications 1 et 2, caractérisé en ce qu'un réceptacle de titre (RR, RS) est placé sous l'un au moins des organes de guidage et d'apport.

4. Dispositif selon l'une des revendications 1 à 3, caractérisé en ce que l'organe de guidage et d'apport comprend un magasin (100) contenant une pile de titres prédécoupés.

5. Dispositif selon l'une des revendications 1 à 3, caractérisé en ce que l'organe de guidage et d'apport comprend un dévidoir de ruban cartonné continu associé à des moyens de découpe.

6. Dispositif selon l'une des revendications précédentes, caractérisé en ce que l'organe de guidage et d'apport est propre (21, 210 - 214) à recevoir un titre déjà émis.

7. Dispositif selon l'une des revendications précédentes, caractérisé en ce que les moyens d'entraînement du titre sur le trajet interne comprennent au moins une courroie crantée (10) qui s'enroule en circuit fermé sur des galets (135, 141, ...175), et en ce que, dans sa partie concernant le trajet interne du titre, la courroie crantée s'appuie sur des galets sur lesquels elle s' incurve tandis que le titre passe entre la courroie et les galets, et en ce que deux galets adjacents sont espacés d'une distance inférieure à la longueur du titre.

8. Dispositif selon la revendication 7, caractérisé en ce que l'angle d'incurvation de la courroie (10) sur chaque galet est compris entre 160 et 170°.

9. Dispositif selon l'une des revendications 7 et 8, caractérisé en ce que la courroie crantée (10) est entraînée par un moteur pas à pas.

10. Dispositif selon l'une des revendications 7 à 9, caractérisé en ce que la courroie (10) est sollicitée par un galet tendeur situé en dehors du trajet interne.

11. Dispositif selon l'une des revendications 7 à 10, caractérisé en ce que, le titre cartonné possédant une piste magnétique, la courroie crantée (10) qui suit le titre de l'entrée à la sortie s'efface au niveau d'un poste à tête magnétique (180), situé en un second point du trajet interne, où le titre est sollicité vers la tête magnétique (180) par une seconde courroie (20) coopérant par friction avec la première (10).

12. Dispositif selon la revendication 11, caractérisé en ce que les courroies (10, 20) sont situées sensiblement au droit de la piste magnétique.

13. Dispositif selon l'une des revendications 7 à 12, caractérisé en ce que le pas du crantage de la première courroie est inférieur à 5 mm, de préférence voisin de 2 mm.

14. Dispositif selon l'une des revendications précédentes, caractérisé en ce que le poste de traitement comprend une imprimante à aiguille (145, 146) faisant face à un rouleau (150) qui forme contre-plaque d'impression.

**Claims**

1. A processing device for carded documents, of the type comprising means (10, 135, 10, 203) for conveying a document along an internal path in the device, which path passes through at least one processing station (145, 146) such as a station for printing on the document, at least one end of which is defined by a pair of rollers (135, 175) substantially tangent to one another, while a guide member (11, 110 to 114) is provided outside the internal path to introduce a document into said internal path, characterised in that the tangent (133) common to the two rollers of the pair (135, 175) is inclined in relation to the guiding axis (113) of the introduction member, below this axis, in that this same axis (113) remains substantially tangential to the upper roller and in that the space between the pair of rollers (135, 175) and the guiding axis (113) of the introduction member is free, which, without an additional guide member, enables the document to travel backwards without re-entering said guide and introduction member.

2. A device according to Claim 1, characterised in that the other end of the internal path (203, 163) is arranged like the first.

3. A device according to either of the Claims 1 and 2, characterised in that a document receptacle (RR, RS) is positioned below at least one of the guide and introduction members.

4. A device according to any one of Claims 1 to 3, characterised in that the guide and introduction member comprises a magazine (100) containing a pile of previously cut-up documents.

5. A device according to any one of Claims 1 to 3, characterised in that the guide and introduction member comprises a device for paying out a continuous carded strip, associated with cutting-up means.

6. A device according to any one of the preceding Claims, characterised in that the guide and introduction member is adapted (21, 210 - 214) to receive a document already issued.

7. A device according to any one of the preceding Claims, characterised in that the means for conveying the document over the internal path comprise at least one serrated belt (10) which is wound in a closed circuit over rollers (135, 141, ...175), and in that, in its portion relating to the internal path of the document, the serrated belt rests on rollers over which it bends while the document passes between the belt and the rollers, and in that two adjacent rollers are spaced apart at a distance which is shorter than the length of the document.

8. A device according to Claim 7, characterised in that the angle of curvature of the belt (10) over each roller is comprised between 160 and 170°.

9. A device according to either one of Claims 7 and 8, characterised in that the serrated belt (10) is driven by a stepping motor.

10. A device according to any one of Claims 7 to 9, characterised in that the belt (10) is acted upon by a tension roller situated outside the internal path.

11. A device according to any one of Claims 7 to 10, characterised in that, if the carded document has a magnetic track, the serrated belt (10), which follows the document from the entrance to the exit, moves aside at the level of a station with a magnetic head (180), situated at a second point on the internal path where the document is urged towards the magnetic head (18) by a second belt (20) cooperating with the first (10) by friction.

12. A device according to Claim 11, characterised in that the belts (10, 20) are situated substantially at right angles to the magnetic track.

13. A device according to any one of Claims 7 to 12, characterised in that the pitch of the serration of the first belt is less than 5 mm, preferably about 2 mm.

14. A device according to any one of the preceding Claims, characterised in that the processing station comprises a needle printer (145, 146) facing a cylinder (15) which forms a printing backplate.

**Patentansprüche**

1. Vorrichtung zum Bearbeiten kartonierter Berechtigungsscheine von der Art, die Mittel (10, 135, 10, 203) zum Bewegen eines Scheins entlang einer inneren Strecke der Vorrichtung aufweist, wobei diese Strecke über mindestens einen Bearbeitungsposten (145, 146) wie z. B. einen Posten zum Aufdrucken auf den Schein verläuft, mindestens ein Ende der Strecke durch ein Paar Rollen (135, 175) definiert ist, die im wesentlichen einander tangieren, während außerhalb der inneren Strecke ein Führungsorgan (11, 110 bis 114) zur Zufuhr eines Scheins zur inneren Strecke vorgesehen ist, dadurch gekennzeichnet, daß die den beiden Rollen des Paars (135, 175) gemeinsame Tangente (133) auf die Führungsachse (113) des Zufuhrorgans unterhalb dieser Achse geneigt ist, daß diese Achse (113) im wesentlichen zur oberen Rolle tangierend bleibt und daß der Raum zwischen dem Paar Rollen (135, 175) und der Führungsachse (113) des Zufuhrorgans frei ist, was ohne zusätzliches Führungsorgan eine Rückwärtsbewegung des Scheines erlaubt, ohne daß dieser in das Führungs- und Zufuhrorgan zurückkehrt.

2. Vorrichtung nach Anspruch 1, dadurch gekennzeichnet, daß das andere Ende der inneren Strecke (203, 163) wie das erste angeordnet ist.

3. Vorrichtung nach einem der Ansprüche 1 und 2, dadurch gekennzeichnet, daß ein Auffangbehälter (RR, RS) für Scheine unter mindestens einem der Führungs- und Zufuhrmittel angeordnet ist.

4. Vorrichtung nach einem der Ansprüche 1 bis 3, dadurch gekennzeichnet, daß das Führungs- und Zufuhrorgan einen Vorratsbehälter (100) mit einem vorgeschnittenen Stapel Scheine aufweist.

5. Vorrichtung nach einem der Ansprüche 1 bis 3, dadurch gekennzeichnet, daß das Führungs- und Zufuhrorgan eine Abgabevorrichtung eines durchgehenden kartonierten Streifens aufweist, die mit Schneidemitteln verbunden ist.

6. Vorrichtung nach einem der vorhergehenden Ansprüche, dadurch gekennzeichnet, daß das Führungs- und Zufuhrorgan geeignet ist (21, 210 - 214), einen schon ausgestellten Schein aufzunehmen.

7. Vorrichtung nach einem der vorhergehenden Ansprüche, dadurch gekennzeichnet, daß die Mittel zum Bewegen des Scheins entlang der inneren Strecke mindestens einen Zahnriemen (10) aufweisen, der in geschlossenem Kreis über Rollen (135, 141, ...175) läuft, und daß der Zahnriemen in seinem die innere Strecke des Scheins betreffenden Bereich auf Rollen aufliegt, auf denen er sich krümmt, während der Schein zwischen dem Riemen und den Rollen läuft, und daß zwei benachbarte Rollen einen geringeren Abstand als die Länge des Scheins haben.

8. Vorrichtung nach Anspruch 7, dadurch gekennzeichnet, daß der Krümmungswinkel des Riemens (10) auf jede Rolle zwischen 160 und 170° liegt.

9. Vorrichtung nach einem der Ansprüche 7 und 8, dadurch gekennzeichnet, daß der Zahnriemen (10) von einem Schrittschaltmotor angetrieben wird.

10. Vorrichtung nach einem der Ansprüche 7 bis 9, dadurch gekennzeichnet, daß der Riemen (10) von einer außerhalb der inneren Strecke liegenden Spannrolle gezogen wird.

11. Vorrichtung nach einem der Ansprüche 7 bis 10, dadurch gekennzeichnet, daß, wenn der kartonierte Schein eine Magnetspur aufweist, der Zahnriemen (10), der dem Schein vom Eingang bis zum Ausgang folgt, in Höhe eines Postens mit Magnetkopf (180) verschwindet, der sich an einem zweiten Punkt der inneren Strecke befindet, wo der Schein durch einen zweiten Riemen (20), der durch Reibung mit dem ersten (10) Zusammenwirkt, zum Magnetkopf (180) gezogen wird.

12. Vorrichtung nach Anspruch 11, dadurch gekennzeichnet, daß die Riemen (10, 20) im wesentlichen rechtwinklig zur Magnetspur liegen.

13. Vorrichtung nach einem der Ansprüche 7 bis 12, dadurch gekennzeichnet, daß der Zahnabstand des ersten Riemens unter 5 mm, vorzugsweise nahe 2 mm liegt.

14. Vorrichtung nach einem der vorhergehenden Ansprüche, dadurch gekennzeichnet, daß der Bearbeitungsposten einen Nadeldrucker (145, 146) aufweist, der einer Walze (150) gegenüberliegt, die als Druck-Anschlagplatte wirkt.